# EUROPEAN PATENT SPECIFICATION

(11) **EP 0 976 633 B1**
(45) Date of publication and mention of the grant of the patent: **27.07.2005**
(21) Application number: 99200516.5
(22) Date of filing: 23.02.1999
(51) Int. Cl.: B60T 13/66, B60T 17/22

(54) **A control and communication system for railway trains**
Steuer- und Kommunikationsanlage für Eisenbahnzüge
Installation de commande et de communication pour trains de chemin de fer

(30) Priority: 31.07.1998 IT TO980668
(43) Date of publication of application: 02.02.2000
(73) Proprietor: FAIVELEY TRANSPORT PIOSSASCO S.p.A., 10045 Piossasco (TO) (IT)
(72) Inventor: Barberis, Dario, 10134 Torino (IT); Tione, Roberto, 10020 Lauriano, Torino (IT)
(74) Representative: Quinterno, Giuseppe

(56) References cited:
- EP-A- 0 825 086
- EP-A- 0 832 800
- DE-C- 4 422 261
- US-A- 4 652 057
- US-A- 5 630 565
- SONDER E: "ELEKTRISCHE/ELEKTRONISCHE BREMS-ABFRAGE UND STEUERUNG FUR GUTERZUGE" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, vol. 119, no. 11/12, 1 November 1995 (1995-11-01), pages 505-509,512, XP000546707 ISSN: 0941-0589
- PATENT ABSTRACTS OF JAPAN vol. 1998, no. 02, 30 January 1998 (1998-01-30) & JP 09 284317 A (YOKOGAWA ELECTRIC CORP), 31 October 1997 (1997-10-31)

## Description

The present invention relates to a control and communication system for railway trains of the kind defined in the preamble of claim 1, particularly for railway trains of so-called high composition, that is to say comprising a large number of carriages or wagons.

Conventionally, a railway train brake control is actuated pneumatically and in the case of trains with a large number of carriages or wagons can give rise to problems both because of the limited speed of propagation of the required braking information along the so-called general duct (a speed which must not be less than 250 m/sec and which is, however, usually less than 300 m/sec), and above all because of the slow rate at which the pressure in the auxiliary reservoirs of the individual carriages or wagons is re-established via the general duct during braking.

These problems mean that for very long trains in transit on tracks characterised by significant inclinations, braking becomes practically ungovernable, to the point of reducing the operating speed to values incompatible with the requirements of an optimum use of the lines.

In the case of railway trains with a large number of carriages or wagons it is often necessary to have recourse to locomotives or supplementary engines ganged together at the front of the train, or in intermediate positions and/or at the tail. This arrangement involves in each case the adoption of arrangements to ensure the operating synchronisation of the various locomotives or engines both during the driving phase and in the "coasting" phase as well as during imposed braking (braking of the diesel or electric motors of the engines). The operating synchronism between various motors remote from one another is commonly achieved by human supervision of each traction machine: the driver of each auxiliary engine communicates, usually by way of radio telephone, with the driver of the leading locomotive (main engine) and receives suitable instructions on the manoeuvres to perform. This arrangement involves working inefficiencies, loss of time and easily imaginable potential manoeuvring errors.

Only for certain determined trains, generally those adapted for passenger services, has there been proposed the use of hard wired remote control systems for automatically coordinating the operation of the various locomotives or engines of a train.

In very recent times experimental applications have been tried in which recourse has been made to communication systems along the train with the use of so-called buses, such as the CAN-bus. One such system, of the initially defined kind, is disclosed in SONDER E.: "Elektrische/elektronische Brems-Abfrage und Steuerung für Guterzuge", Zeitschrift für Eisenbahnwesen und Verkehrstechnik, Die Eisenbahntechnik + Glasers Annalen, Georg Siemens Verlagsbuchhandlung, Berlin, DE, vol. 119, No. 11/12, 1 November 1995 (1995-11-01), pages 505-509, 512, XP000546707 ISSN: 0941-0589.

The object of the present invention is to provide an improved control and communication system for a railway train which comprises at least one main engine and a plurality of carriages or wagons.

This and other objects are achieved according to the invention with a control and communication system the salient characteristics of which are defined in the attached Claim 1.

Further characteristics and advantages of the invention will become apparent from the following detailed description made purely by way of non-limitative example, with reference to the attached drawings, in which:
Figure 1 is a schematic representation of a railway train provided with a control and communication system according to the invention, shown in block diagram form;
Figure 2 shows the application of a control and communication system according to the invention to a railway train including a main locomotive or engine and at least one auxiliary locomotive or engine; and
Figure 3 is a simplified diagram of a train provided with a system according to the invention, in which there is shown an operating strategy for a failure condition.

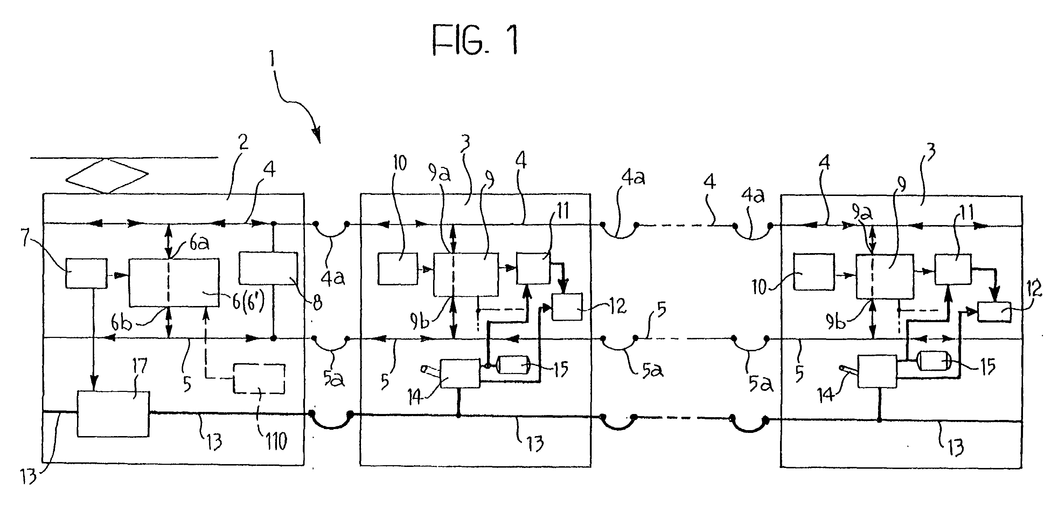

In Figure 1 the reference numeral 1 generally indicates a railway train comprising a main or leading engine 2 and a plurality of carriages or wagons 3.

The engine 2 is for example an electric locomotive, or may be a diesel engine locomotive. The carriages or wagons 3 can be wagons for the transport of merchandise or carriages for the transport of passengers.

The train 1 of Figure 1 is provided with a control and communication system comprising first and second bi-directional transmission lines indicated 4 and 5, which expend parallel to and spaced from one another along the entire train through the various carriages or wagons 3.

The lines 4 and 5 are conveniently constituted for example by twin wire lines of the twisted pair type. Each of these lines comprises respective sections or portions which extend through the engine and each of the carriages, and which are interconnected together between the engine and the carriage adjacent to it, as well as between the individual carriages, by coupling pieces 4a and 5a.
Conveniently the lines 4 and 5 extend within the engine and each carriage, in spaced relation from one another, and likewise the coupling portions 4a and 5a are spaced from one another for the purpose of avoiding, as far as possible, accidental interruptions of both lines at the same section.

As will become apparent more clearly hereinafter, the lines 4 and 5 are able to allow the transmission of electrical energy for power supply purpose along the train as well as control signals and information or state signals of serial type with the so-called travelling wave technique.

The control and communication system comprises a main control unit 6 installed on the engine 2 and provided with a pair of bi-directional input/output ports 6a and 6b respectively connected to the line 4 and the line 5.

The main control unit 6 is conveniently formed using microprocessor technology, and is connected to the brake control device 7 of the train, installed on the engine.

On the engine 2, between the lines 4 and 5, there is connected a supply device 8 operable to deliver to these lines the electrical currents necessary for power supply of the electrical and electronic devices installed on the carriages or wagons 3, about which more will be said hereinafter. The supply device 8 can be incorporated in the control unit 6.

On each carriage or wagon 3 there is installed a slave control unit 9 provided with a pair of bi-directional input/output ports 9a, 9b, respectively connected to the transmission lines 4 and 5.

Each slave control unit 9 is formed for example using microprocessor technology and is able to receive the necessary electrical supply for its operation as well as control signals and/or state or information signals, via the lines 4 and 5.

To the control unit 9 in each carriage or wagon 3 there are connected sensor devices, generally indicated 10, operable to provide electrical signals indicative of conditions or states of devices on board, such as, for example, solenoid valves of the brake system, and/or signals indicative of the values assumed by certain monitoring parameters such as pneumatic brake pressure, weight acting on the suspension etc.

The control unit 9 of each carriage or wagon 3 is also connected to electro-pneumatic actuator devices 11 such as, for example, solenoid valve assemblies, which control the supply and discharge of compressed air to brake cylinders 12 associated with the carriage or wagon.

In a manner known per se the railway train 1 includes a pneumatic braking system having a pneumatic duct 13 which extends along the entire train. On board each carriage or wagon 3 there is, in general, connected a pneumatic brake control distributor 14, connected to the general duct 13, and operable to control the delivery of air under pressure from (at least) one auxiliary on board reservoir 15 to the braking cylinders 12 of the carriage or wagon.

On board the engine 2 the pressure of the general duct 13 is suitably regulated by means of an electro-pneumatic device 17 associated with the control device 7, taking compressed air from pneumatic supply devices of type known per se and not illustrated.

By way of example the general duct 13 is maintained in normal conditions at a pressure of 5 bar.

In conventional pneumatic brake systems the brake command information is represented by a reduction in the pressure in the general duct 13, for example from 5 bar to 3.5 bar, following which the distributors 14 of the individual carriages or wagons cause the delivery of air under pressure from the associated reservoir 15 to the brake cylinders 12. In such conventional systems, during braking, the pressure in the general duct 13 is returned to the nominal value by delivering air under pressure to the reservoirs 15 of the carriages or wagons 3 via the associated distributors 14.

With the control and communication system according to the invention the brake command information is no longer nominally transmitted by pneumatic means through the general duct 13 but rather via electrical means, by means of signals of serial type for control of the brake, which the main control unit 6 of the engine 2 transmits to the slave control units 9 of the individual carriages or wagons via one of the transmission lines 4 and 5. Following reception of brake command signals the slave control units 9 of individual carriages or wagons 3 control the solenoid valve units 11 in such a way that these latter cause the required passage of air under pressure from the reservoir 15 to the brake cylinders 12 bypassing the distributors 14.

In this way the control and communication system according to the invention obviates the problems of prior art systems relating to the propagation by pneumatic means of the information for controlling the brake. This is particularly convenient for very long railway trains, or rather trains comprising a very large number of carriages or wagons.

After braking, in the subsequent brake release phase, the supply of air under pressure to the reservoirs 15 of the carriages or wagons 3 is nevertheless ensured via the general duct 13.

The presence of the distributor 14 on board each carriage or wagon nevertheless allows the delivery of brake command information by pneumatic means via a controlled reduction in the pressure in the general duct 13 in an entirely conventional manner if the electronic control and communication system associated with the lines 4 and 5 should be in a failure or breakdown condition which can not be immediately rectified.

In the control and communication system, the main control unit 6 on board the engine 2 is conveniently arranged to send priority signals to the slave control units 9 of the individual carriages or wagons 3 for the control of the brake utilising one of the two communication lines 4 or 5, and periodically to receive from each of the said slave control units information or state signals via the other of the said lines.

The system has an intrinsic redundancy thanks to the presence of two communication lines along the entire train.

Conveniently, the main control unit 6 is arranged to detect and determine the location of possible interruptions which may occur on one of the communication lines 4, 5. The occurrence of an interruption and its location along the train can be detected for example by the fact that the main control unit 6 no longer receives the information or state signals from the control units 9 of the carriages or wagons 3 situated downstream of the interruption.

In the event of interruption of a line 4 or 5 the main control unit 6 is arranged to utilise the still active line for the delivery of brake control priority signals to the slave control units 9 of the various carriages or wagons. In such a situation the control unit 6 can suspend the acquisition of information or state signals from the various slave units 9, or else the exchange of such information can nevertheless continue on the single surviving line, in this case with the overall performance of the system being partially degraded.

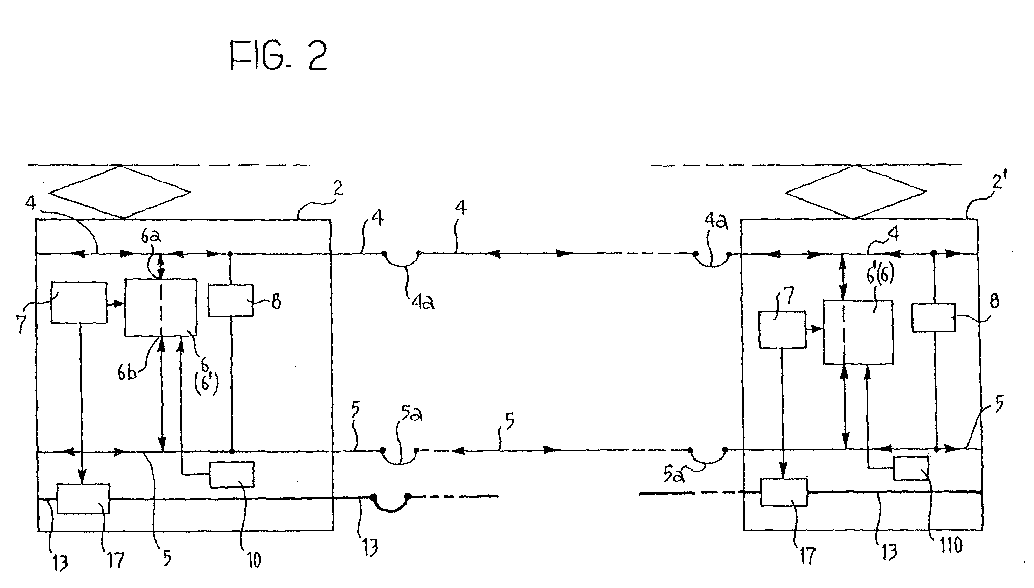

The railway train 1 can include, as well as the main or lead engine 2, at least one further auxiliary engine such as that indicated 2' in Figure 2. Conveniently the or each auxiliary engine 2' is also traversed by the transmission lines 4 and 5, and is also provided with a control unit 6' connected to these lines.

This unit is conveniently arranged to be able to function as a main unit as described hereinabove, or as a slave unit. This is done for the purpose of allowing the use of the various engines both as main engines and as auxiliary engines. Advantageously the same can be true for the unit 6 of the main engine 2.

This arrangement allows the delivery of synchronisation signals to the control unit 6' of the or each auxiliary engine 2' by the main control unit 6 of the lead engine 2 by means of the transmission lines 4 and 5. This makes it possible to achieve an adequate operating synchronism between the various engines of the train avoiding the previously indicated disadvantages.

To the control unit 6 of the or each auxiliary engine 2' there are conveniently connected sensors or transducers 110' to provide information or state signals intended to be transmitted to the main control unit 6 of the lead engine 2 via one or the other of the transmission lines 4 and 5 for feedback verification by the main control unit 6 of the synchronisation of the various operations.

Advantageously, the slave control units 9, 6' associated with the carriages or wagons 3 and possible auxiliary engines 2' are arranged to be able to acquire and transmit signals from one or the other of the transmission lines 4, 5 equally. Such control units are moreover able, when they receive a specific transfer command signal from the main control unit 6, to transfer the command signals or information signals received on one line 4 or 5 on to the other line 5 or 4.

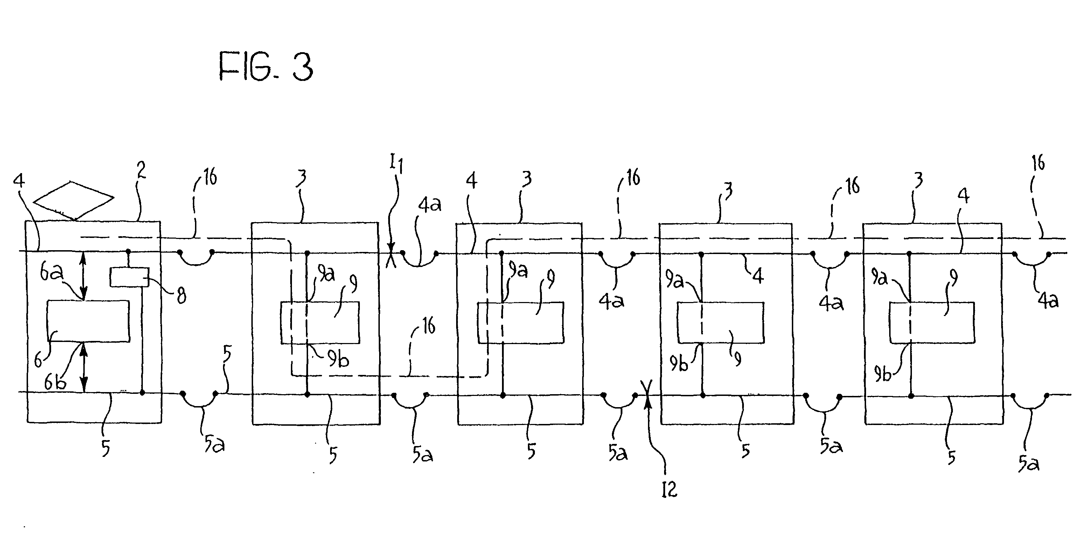

The main control unit 6 is moreover advantageously prearranged to detect a possible condition in which the transmission lines 4 and 5 are interrupted each between different pairs of slave control units, such as the condition illustrated by way of example in Figure 3, in which the two interruptions are indicted I1 and I2. Upon detection of such a condition the main control unit 6 sends the said transfer command signals to at least two slave control units between which there is an interruption of one of the transmission lines 4, 5.

In the example of Figure 3, the transfer command signals are transmitted (for example) to the control units 9 for the first and second carriage 3 after the engine, between which the interruption I1 has occurred. In this way all the slave control units 9 and possibly 6' of the train are nevertheless able to communicate with the main control unit 6 via a provisional transmission line 16 indicated in broken outline in Figure 3, which comprises portions of both transmission lines 4 and 5, and the slave control units 9 or 6' to which the transfer command signals have been sent.

With the system described above a minimum essential operability of the communication and control system can always be ensured except in the very low probability case of simultaneous interruption of both the lines 4 and 5 between two consecutive carriages or wagons.

In emergency operation in a condition of the type exemplified in Figure 3, the provisional transmission lines 16 can be utilised for the delivery of only brake command signals or for the delivery of such signals as well as information or state signals, in this latter case with a partial degradation of the performance of the system.

In operation in an emergency condition of the type shown in Figure 3, the provisional line 6' is nevertheless usable for the propagation of the electricity supply-for the various-slave control units 9 and 6'.

The system described is further able to operate in trains in which one or more carriages or wagons or auxiliary engines are provided with a single transmission line.

## Claims

1. A communication and control system for a railway train (1) which comprises at least one main engine (2) and a plurality of carriages or wagons (3), the system comprising
first and second bi-directional transmission lines (4, 5) which extend parallel to and spaced from one another along the train (1);
a control unit operating as a main unit (6) installed on the said main engine (2) and connected, in the said main engine, to both the said transmission lines (4, 5)- and to brake control systems or devices (7) of the train (1);
a plurality of slave control units (9) each of which is installed upon a respective carriage or wagon (3) and is connected, in the respective carriage or wagon, to both the said transmission lines (4, 5), to solenoid valve units (11) associated with pneumatic brake actuators (12), as well as to sensor devices (10) associated with the carriage or wagon (3);
the main control unit (6) and the slave control unit (9) being arranged to communicated with one another via the said transmission lines (4, 5) according to a predetermined serial protocol;
the main control unit (6) being arranged to transmit to the slave control unit (9) brake command signals of serial type, and to receive and acquire information or state signals likewise of serial type from the said slave control units (9) via at least one of the said transmission lines (4, 5);
the system being **characterised in that** the slave control units (9) are arranged to acquire and transmit signals on one or the other transmission line (4, 5) equally, and are moreover operable, when they receive a transfer command signal, to transfer to the other transmission line (5, 4) signals received on one line (4, 5); the main control unit (6) being arranged to detect a condition in which the said transmission lines (4, 5) are both interrupted, each between different pairs of slave control units (9), and in such a case to send transfer command signals to at least two slave control units (9) from among those in which there is an interruption (I1, I2) of one of the said transmission lines (4, 5), in such a way that all the slave control units (9) are able to communicate with the main control units (6) via a provisional transmission line (16) comprising portions of both the said transmission lines (4, 5) and the slave control units which have been sent the said transfer command signals.

2. system according to Claim 1 for a railway train (1) comprising a lead or main engine (2) and at least one further auxiliary engine (2');
the system being **characterised in that** the said auxiliary engine (2') is also provided with a control unit capable of acting as a slave unit (6') connected to the said transmission lines (4, 5) and arranged to receive synchronisation signals coming from the control unit (6) of the lead engine (2) and to transmit information or state signals to the control unit (6) of the lead engine (2) via at least one of the said transmission lines (4, 5).

3. A system according to one of the preceding claims, **characterised in that** the main control unit (6) is arranged to transmit brake control signals to the slave control units (9, 6') via one of the said transmission lines (4, 5) and to receive information signals coming from the said control units (9, 6) via the other (5, 4) of the said transmission lines.

4. A system according to any preceding claim, **characterised in that** the control unit operating as main unit (6) is arranged to detect and determine the location along the train (1) of the position of a failure of one of the said transmission lines (4, 5).

5. A system according to Claim 4, **characterised in that** the main control unit (6) is arranged, in the case of a failure of one of the said transmission lines (4, 5) to transmit at least the brake control signals and possible synchronisation signals for one or more auxiliary engines (2') on the other of the said transmission lines (5, 4).

6. A system according to any preceding claim, **characterised in that** the said transmission lines (4, 5) are further connected to electrical cower supply devices (8) which can be activated in at least one engine (2) to distribute this power to the slave control unit (9, 6').

7. A system according to Claim 6 , **characterised in that** the slave control units (9, 6') are arranged to allow the passage of electrical power from one transmission line (4, 5) to the other which are connected, when they receive the said transfer command signal, in such a way that when both the said transmission lines (4, 5) are interrupted, each between different pairs of slave control units, all the said slave control units can be supplied with electrical power propagated through the said provisional transmission line (16).

8. A system according to any preceding claim, **characterised in that** the said transmission lines (4, 5) are travelling wave twin wire lines operable to transmit electrical power and serial type signals simultaneously.

9. A system according to any preceding claim, **characterised in that** it is able to operate in trains comprising one or more vehicles (3, 2) provided with a single transmission line.

## Patentansprüche

1. Kommunikations- und Steuersystem für einen Eisenbahnzug (1), welcher zumindest eine Hauptlokomotive (2) and eine Mehrzahl von Wägen oder Waggonen (3) umfasst, wobei das System Folgendes umfasst:
erste und zweite bidirektionale Übertragungsstrecken (4, 5), die sich parallel und mit Abstand voneinander entlang des Zugs (1) erstrecken;
eine als Haupteinheit (6) funktionierende Steuereinheit, die an der Hauptlokomotive (2) installiert ist und in dieser Hauptlokomotive an beiden Übertragungsstrecken (4, 5) und an Bremssteuerungssystemen oder -geräten (7) des Zugs (1) angeschlossen ist;
eine Mehrzahl von untergeordneten Steuereinheiten (9), von denen jede an einem jeweiligen Wagen oder Waggon (3) installiert ist und im jeweiligen Wagen oder Waggon an beiden Übertragungsstrecken (4, 5), an zu Druckluftbremsauslösern (12) gehörigen Magnetventileinheiten (11), sowie an zum Wagen oder Waggon (3) gehörigen Sensorgeräten (10) angeschlossen ist;
wobei die Hauptsteuereinheit (6) und die untergeordnete Steuereinheit (9) dazu eingerichtet sind, über die Übertragungsstrecken (4, 5) gemäß einem vorbestimmten Serienprotokoll miteinander zu kommunizieren;
die Hauptsteuereinheit (6) dazu eingerichtet ist, der untergeordneten Steuereinheit (9) Bremsbefehlssignale vom seriellen Typ zu übermitteln und über zumindest eine der Übertragungsstrecken (4, 5) Informationen oder Zustandssignale, die ebenfalls dem seriellen Typ angehören, von den untergeordneten Steuereinheiten (9) zu empfangen und zu erfassen;
wobei das System **dadurch gekennzeichnet ist, dass** die untergeordneten Steuereinheiten (9) dazu eingerichtet sind, auf der einen oder der anderen Übertragungsstrecke (4, 5) gleichermaßen Signale zu erfassen und zu übertragen, und überdies, wenn sie ein Übertragungsbefehlssignal empfangen, dazu betriebsfähig sind, Signale, die auf der einen Strecke (4, 5) empfangen wurden, auf die andere Übertragungsstrecke (5, 4) zu übertragen; wobei die Hauptsteuereinheit (6) dazu eingerichtet ist, einen Zustand zu erkennen, in dem beide Übertragungsstrecken (4, 5) unterbrochen sind, und zwar jeweils zwischen verschiedenen Paaren von untergeordneten Steuereinheiten (9), und in einem solchen Fall an zumindest zwei untergeordnete Steuereinheiten (9) von jenen, bei denen es eine Unterbrechung (I1, I2) einer der Übertragungsstrecken (4, 5) gibt, Übertragungsbefehlssignale in einer solchen Weise zu senden, dass alle untergeordneten Steuereinheiten (9) in der Lage sind, über eine provisorische Übertragungsstrecke (16) mit den Hauptsteuereinheiten (6) zu kommunizieren, welche provisorische Übertragungsstrecke Abschnitte beider Übertragungsstrecken (4, 5) und der untergeordneten Steuereinheiten, an welche die Übertragungsbefehlssignale gesendet wurden, umfasst.

2. System gemäß Anspruch 1 für einen Eisenbahnzug (1), umfassend eine Führungs- oder Hauptlokomotive (2) und zumindest eine weitere Hilfslokomotive (2');
wobei das System **dadurch gekennzeichnet ist, dass** die Hilfslokomotive (2') ebenfalls mit einer Steuereinheit ausgestattet ist, die in der Lage ist, als untergeordnete Einheit (6') zu fungieren, welche an den Übertragungsstrecken (4, 5) angeschlossen ist und dazu eingerichtet ist, von der Steuereinheit (6) der Führungslokomotive (2) kommende Synchronisierungssignale zu empfangen und der Steuereinheit (6) der Führungslokomotive (2) über zumindest eine der Übertragungsstrecken (4, 5) Informationen oder Zustandssignale zu übermitteln.

3. System gemäß einem der vorhergehenden Ansprüche, **dadurch gekennzeichnet, dass** die Hauptsteuereinheit (6) dazu eingerichtet ist, den untergeordneten Steuereinheiten (9, 6') über eine der Übertragungsstrecken (4, 5) Bremssteuerungssignale zu übermitteln und über die andere (5, 4) Übertragungsstrecke Informationssignale, die von den Steuereinheiten (9, 6) kommen, zu empfangen.

4. System gemäß irgendeinem vorhergehenden Anspruch, **dadurch gekennzeichnet, dass** die als Haupteinheit (6) funktionierende Steuereinheit dazu eingerichtet ist, die Lage entlang des Zugs (1) der Position eines Defekts einer der Übertragungsstrecken (4, 5) zu erkennen und zu bestimmen.

5. System gemäß Anspruch 4, **dadurch gekennzeichnet, dass** die Hauptsteuereinheit (6) dazu eingerichtet ist, im Falle eines Defekts einer der Übertragungsstrecken (4, 5) zumindest die Bremssteuerungssignale und etwaige Synchronisierungssignale für eine oder mehrere Hilfslokomotiven (2') auf der anderen Übertragungsstrecke (5, 4) zu übertragen.

6. System gemäß irgendeinem vorhergehenden Anspruch, **dadurch gekennzeichnet, dass** die Übertragungsstrecken (4, 5) weiters an Elektroenergieversorgungsgeräten (8) angeschlossen sind, welche in zumindest einer Lokomotive (2) aktiviert werden können, um diese Energie zur untergeordneten Steuereinheit (9, 6') hin zu verteilen.

7. System gemäß Anspruch 6, **dadurch gekennzeichnet, dass** die untergeordneten Steuereinheiten (9, 6') dazu eingerichtet sind, das Fließen von elektrischer Energie von einer Übertragungsstrecke (4, 5) zur anderen, welche verbunden sind, zuzulassen, wenn sie das Übertragungsbefehlssignal empfangen, und zwar in einer solchen Weise, dass, wenn beide Übertragungsstrecken (4, 5) jeweils zwischen verschiedenen Paaren von untergeordneten Steuereinheiten unterbrochen sind, alle untergeordneten Steuereinheiten mit elektrischer Energie versorgt werden können, die sich durch die provisorische Übertragungsstrecke (16) fortpflanzt.

8. System gemäß irgendeinem vorhergehenden Anspruch, **dadurch gekennzeichnet, dass** die Übertragungsstrecken (4, 5) Wanderwellen-Doppeladerleitungen sind, die dazu betriebsfähig sind, gleichzeitig elektrische Energie und Signale vom seriellen Typ zu übermitteln.

9. System gemäß irgendeinem vorhergehenden Anspruch, **dadurch gekennzeichnet, dass** es in der Lage ist, in Zügen zu funktionieren, die ein oder mehrere, mit einer einzigen Übertragungsstrecke ausgestattete Vehikel (3, 2) umfassen.

## Revendications

1. Système de communication et de commande pour un train de chemin de fer (1) qui comprend au moins une locomotive principale (2) et une pluralité de voitures ou wagons (3), le système comprenant
des première et seconde lignes de transmission bidirectionnelle (4, 5) qui s'étendent de manière parallèle et espacée l'une par rapport à l'autre le long du train (1) ;
une unité de commande fonctionnant comme une unité principale (6) installée sur ladite locomotive principale (2) et raccordée, dans ladite locomotive principale, aux deux dites lignes de transmission (4, 5) et à des systèmes ou dispositifs de commande de freinage (7) du train (1) ;
une pluralité d'unités de commande secondaires (9), chacune étant installée sur une voiture ou un wagon respectif (3) et raccordée, dans la voiture ou le wagon respectif, à la fois aux deux dites lignes de transmission (4, 5), à des unités d'électrovanne (11) associées à des actionneurs de freinage pneumatique (12), ainsi qu'à des dispositifs de détection (10) associés à la voiture ou au wagon (3) ;
l'unité de commande principale (6) et l'unité de commande secondaire (9) étant agencées pour communiquer l'une avec l'autre via lesdites lignes de transmission (4, 5) selon un protocole série prédéterminé ;
l'unité de commande principale (6) étant agencée pour transmettre à l'unité de commande secondaire (9) des signaux de commande de freinage de type série, et pour recevoir et obtenir des signaux d'information ou d'état également de type série en provenance desdites unités de commande secondaires (9) via au moins l'une desdites lignes de transmission (4, 5) ;
le système étant **caractérisé en ce que** les unités de commande secondaires (9) sont agencées pour obtenir et transmettre des signaux sur l'une ou l'autre des lignes de transmission (4, 5) de manière égale, et peuvent de plus fonctionner, lorsqu'elles reçoivent un signal de commande de transfert, pour transférer à l'autre ligne de transmission (5, 4) des signaux reçus sur une ligne (4, 5) ; l'unité de commande principale (6) étant agencée pour détecter une condition dans laquelle lesdites lignes de transmission (4, 5) sont toutes les deux interrompues, chacune entre des paires différentes d'unités de commande secondaires (9), et dans ce cas pour envoyer des signaux de commande de transfert à au moins deux unités de commande secondaires (9) parmi celles dans lesquelles il y a une interruption (I1, I2) de l'une desdites lignes de transmission (4, 5), de sorte que toutes les unités de commande secondaires (9) soient capables de communiquer avec l'unité de commande principale (6) via une ligne de transmission provisoire (16) comprenant des parties des deux dites lignes de transmission (4, 5) et des unités de commande secondaires auxquelles ont été envoyés lesdits signaux de commande de transfert.

2. Système selon la revendication 1 pour un train de chemin de fer (1) comprenant une locomotive de tête ou principale (2) et au moins une autre locomotive auxiliaire (2') ;
le système étant **caractérisé en ce que** ladite locomotive auxiliaire (2') est également dotée d'une unité de commande capable d'agir comme une unité secondaire (6') raccordée auxdites lignes de transmission (4, 5) et agencée pour recevoir des signaux de synchronisation provenant de l'unité de commande (6) de la locomotive de tête (2) et pour transmettre des signaux d'information ou d'état à l'unité de commande (6) de la locomotive de tête (2) via au moins l'une desdites lignes de transmission (4, 5).

3. Système selon l'une des revendications précédentes, **caractérisé en ce que** l'unité de commande principale (6) est agencée pour transmettre des signaux de commande de freinage aux unités de commande secondaires (9, 6') via l'une desdites lignes de transmission (4, 5) et pour recevoir des signaux d'information provenant desdites unités de commande (9, 6) via l'autre (5, 4) desdites lignes de transmission.

4. Système selon l'une quelconque des revendications précédentes, **caractérisé en ce que** l'unité de commande fonctionnant comme une unité principale (6) est agencée pour détecter et déterminer l'emplacement le long du train (1) de la position d'une défaillance de l'une desdites lignes de transmission (4, 5).

5. Système selon la revendication 4, **caractérisé en ce que** l'unité de commande principale (6) est agencée, dans le cas d'une défaillance de l'une desdites lignes de transmission (4, 5), pour transmettre au moins les signaux de commande de freinage et des signaux de synchronisation éventuels pour une ou plusieurs locomotives auxiliaires (2') sur l'autre desdites lignes de transmission (5, 4).

6. Système selon l'une quelconque des revendications précédentes, **caractérisé en ce que** lesdites lignes de transmission (4, 5) sont en outre raccordées à des dispositifs d'alimentation électrique (8) qui peuvent être activés dans au moins une locomotive (2) pour distribuer cette puissance à l'unité de commande secondaire (9, 6').

7. Système selon la revendication 6, **caractérisé en ce que** les unités de commande secondaires (9, 6') sont agencées pour permettre le passage d'une puissance électrique d'une ligne de transmission (4, 5) à l'autre, lesquelles sont raccordées, lorsqu'elles reçoivent ledit signal de commande de transfert, de manière à ce que, lorsque les deux dites lignes de transmission (4, 5) sont interrompues, chacune entre des paires différentes d'unités de commande secondaires, toutes lesdites unités de commande secondaires puissent recevoir la puissance électrique propagée par ladite ligne de transmission provisoire (16).

8. Système selon l'une quelconque des revendications précédentes, **caractérisé en ce que** lesdites lignes de transmission (4, 5) sont des lignes câblées jumelles à ondes progressives pouvant fonctionner pour transmettre simultanément une puissance électrique et des signaux de type série.

9. Système selon l'une quelconque des revendications précédentes, **caractérisé en ce qu'**il est capable de fonctionner dans des trains comprenant un ou plusieurs véhicules (3, 2) dotés d'une seule ligne de transmission.
